Europäisches Patentamt

(19) European Patent Office

Office européen des brevets

(11) Publication number: **0 337 006 B1**

# EUROPEAN PATENT SPECIFICATION

(12)

(45) Date of publication of patent specification: **20.05.92**   (51) Int. Cl.⁵: **A01F  15/07**

(21) Application number: **88113183.3**

(22) Date of filing: **13.08.88**

(54) Baling machine for forming cylindrical bales of crop.

(30) Priority: **11.04.88 GB 8808468**

(43) Date of publication of application:
**18.10.89 Bulletin  89/42**

(45) Publication of the grant of the patent:
**20.05.92 Bulletin  92/21**

(84) Designated Contracting States:
**DE ES FR GB IT NL**

(56) References cited:
**EP-A- 0 149 368**
**EP-A- 0 311 775**
**DE-A- 1 757 733**
**DE-C- 3 710 550**
**US-A- 4 542 617**

(73) Proprietor: **DEERE & COMPANY**
**1 John Deere Road**
**Moline, Illinois 61265(US)**

(72) Inventor: **Viaud, Jean**
**16, Rue de l'Ecole**
**F-57200 Sarreguemines(FR)**

(74) Representative: **Feldmann, Bernhard**
**DEERE & COMPANY European Office Patent**
**Department Steubenstrasse 36-42**
**W-6800 Mannheim 1(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.08/2.19/2.0)

## Description

This invention relates to a machine for forming bales of crop having a baling chamber, a forward storage chamber, and a unit for delivering crop selectively to the baling or storage chamber in which the storage chamber is delimited in its lower part by belt material including a portion located for receiving crop thereon from the delivery unit.

Machines, towed by a tractor, for forming large cylindrical bales of hay (so called "round balers") are well known. As the machine advances, the crop is removed from a windrow by a pick-up mechanism and delivered rearwardly to a baling chamber where it is rolled into a bale. In one type of machine the chamber is defined by runs of belts trained over driven rolls, whilst in another type fixed position rolls form the chamber.

On completion a bale is tied with twine wrapped round it to maintain the crop within the bale, a gate formed by the rear portion of the machine is opened and the bale is discharged. During this period the machine is stationary since crop can no longer be delivered to the baling chamber.

In order to save time many proposals have been made to keep the machine advancing along the windrow during the tying and discharge stage. The essence of these is to provide a storage chamber, upstream of the baling chamber, into which crop can be diverted and, when baling resumes, from which crop can be fed into the baling chamber.

Such a machine (EP-A1-0 149 368) is considered in the opening paragraph above. The storage chamber is designed as a small baling chamber and delimited at its lower part by a part of a conveyor belt. When the bale, the formation of which has been completed in the baling chamber, has undergone the binding operation and has been discharged and when a rear door of the press has been reclosed, a passage between the storage chamber and the baling chamber will be produced by raising an intermediate roller and belt device. This passage permits a transfer of a bale core formed in the storage chamber into the baling chamber under the conveying action produced by the conveyor belt and due to the fact that the belt core is no longer held back by the runs of the belt device. After this transfer the roller and belt device is lowered into an intermediate position and the conveyor belt is itself lowered by pivoting it about its rear return roller, whereby a front mounted pick-up pivots slightly upwardly with respect to the conveyor belt. In this position of the roller and belt device, of the conveyor belt and of the pick-up crop collected on the ground can be forwarded directly to the bale chamber of the press, so that the formation of a new bale can be proceeded within the bale chamber.

This arrangement is complicated, expensive and increases the weight of the machine considerably.

A known procedure (DE-A-1 757 733) for collecting, loading and unloading crop makes use of a winder mechanism arranged on a wagon. Crop is collected from the ground by a pick-up and conveyed through a swingable spout having internal conveyor means to a rotatable non-drivable coiling beam. The coiling beam is provided with a radial offset and coupled to one end of a web of belting material wrapped upon a support shaft. The support shaft is rotatably connected to the ends of swing arms.

The web is guided on top of the spout and compressed crop delivered by the conveyor inside the spout contacts the radial offset of the coiling beam and rotates the coiling beam such that the web will be coiled into a spiral thereby sandwiching the crop in the spiral. For unloading the crop spiral in uncoiled by manually rotating the bale together with the support shaft by more than 180 ° into an unloading position and by switching on a drive for the support shaft.

The object of the present invention is to provide a mainly "non-stop" round baler which is less expensive and yet which offers good crop control.

According to the present invention the storage chamber has a winder mechanism comprising: a position fixed belt support shaft with said belt material wrapped upon it, extending transversely across said storage chamber, drivable in one direction and rotatable in the opposite direction; and a coiling shaft extending across said storage chamber in spaced relationship to said support shaft, receiving one end of said belt material and drivable in one direction and rotatable in the opposite direction wherein the drives for the shafts are arranged such that the coiling shaft is drivable for conveying crop from the delivery unit to the storage chamber where the belt material is coiled into a spiral and the crop is sandwiched in the spiral for storage and that the support shaft is drivable for uncoiling the belt material and the crop, so that the crop is released and conveyed by the belt material to the baling chamber.

Thus the machine for working without stopping during tying and discharge of a completed bale has a very simple storage chamber by using a winder mechanism drivable for coiling the belt material into a spiral so that the crop is sandwiched and stored in the spiral, for uncoiling the belt material so that the crop is released for delivery, for conveying crop from the delivery unit to the storage area and for conveying uncoiled crop from the storage area to the baling chamber. In the storing position crop is contained between layers of web and in the conveying position crop is contained on top of a layer of web. Thus the crop is well controlled in its various positions.

An embodiment of the invention will now be described with reference to the accompanying diagrammatic drawings in which:

Fig. 1     is a side view (with a side removed) of a round baler of the invention at the start of baling;

Fig. 2     is similar to Fig. 1, but at the completion of baling;

Fig. 3     is similar to Fig. 1, but during discharge of the completed bale; and

Fig. 4     is similar to Fig. 1, but at re-start of baling.

In the drawings, the baler includes a main frame 10 mounted on a pair of wheels 12. The main frame has an upright fore-and-aft extending wall 14 on either side, connected by transverse beams, e.g. front beam 15. A draft tongue 16 is connected to a transverse beam at the front of the frame 10 and extends forwardly for attaching the baler to a tractor (also not shown) which draws the machine.

A plurality of lateral rolls extends over the width of the machine. One set of rolls 18, 19, 20, 22, 24 is journalled in the side walls 14, whilst another set consisting of rolls 26, 28, 30, 32 is journalled in a gate 34 which is swingable about a pivot 36 at the top of the baler. There is also a pair of chamber restricting rolls 38, 40 and two belt take-up rolls 42, 44.

Six rubber belts 46 are trained side-by-side over the rolls, with the exception of the rolls 18, 19 which act as stripper and feed rolls respectively, to provide the configuration shown and they move in the direction indicated by arrows 48, the rolls 18, 19 being driven anti-clockwise as viewed in the Figures. An auger 49 is associated with the roll 20, extending therealong and through the side walls 14, to carry away crop debris which tends to become trapped in this region. Upwardly extending runs 50, 52 of the belts 46 define a bale-forming chamber 54 the ends of which are provided by the side walls 14 and the gate 34 and which has an inlet 56 for crop received from a pick-up 58 beneath it.

In order to accommodate the increasing diameter of a growing bale core in the bale-forming chamber 54, the size of the chamber must also increase and a belt take-up and tensioning mechanism is provided at either side of the machine. These mechanisms include a pair of rearwardly extending idler arms which are mounted on the main frame 10 by way of a horizontal transverse shaft 60, providing a pivot connection for the arms, and of which the right hand arm 62 only is shown;

the belt take-up roll 42 which is supported at either end at an intermediate location on the arms; and the pair of chamber restricting rolls 38, 40 supported at the free ends of the arms. The arms are biased in an anti-clockwise direction in the Figures. The free end of a lever portion 64 which is rigid with the pivot shaft 60 is pivotally connected at a point 66 to the cylinder of a piston and cylinder unit indicated by line 68, loading the arm 62, of which the piston is in turn pivotally connected to the gate 34 at a point 70, a similar arrangement being provided also on the left hand side of the machine.

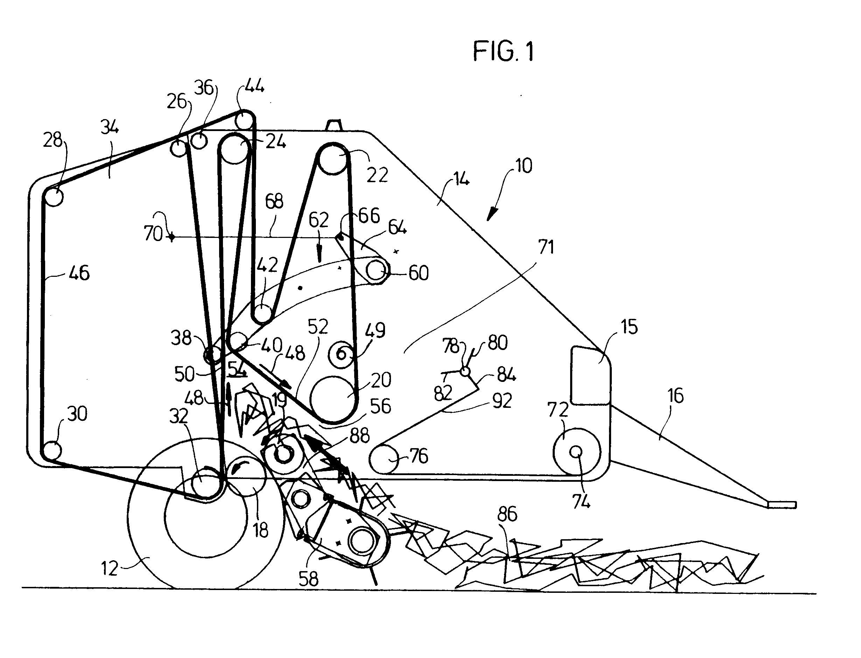

The walls 14 have forwardly extending portions to encompass a crop storage chamber or region 71. Between these portions is a roll of a web of conveyor belting 72 the inner end of which is attached to a transverse uncoiling shaft 74 which carries the roll and which is disposed just behind the rear end of the tongue 16. An idler roll 76 is also mounted between the walls 14 above the pick-up 58 approximately level with the shaft 74 and is disposed intermediate the shaft 74 and a coiling shaft 78 approximately level with the top of the baling chamber 54 in Fig. 1 which shaft 78 again is mounted between the walls 14. The coiling shaft 78 has three plates 80, 82, 84 rigidly attached to it along its length which extend radially outwardly therefrom at 120° intervals round the shaft. The belting 72 is trained over the idler roll 76 and its end is attached to the radially outer lengthwise edge of the plate 84. Both the shafts 74 and 78 are drivable from the main drive of the machine via an electrical or similar clutch (not shown). Thus the shaft 78 can be driven in an anti-clockwise "coiling" direction and the shaft 74 in an anti-clockwise "uncoiling" direction whilst the associated shaft 74, 78 respectively idles but is restrained somewhat from entirely free rotation by being braked or by being slowed frictionally thereby maintaining the belting 72 in tension. The terms "coiling" and "uncoiling" are explained below when the operation of the machine is described.

The pick-up 58 works on a windrow 86 of hay and extends rearwardly and upwardly at a small angle. A feeder fork mechanism 88 is disposed at the rearward downstream end of the pick-up 58, is angled more steeply upwardly and terminates at the roll 19 at the inlet 56 of the baling chamber 54. This mechanism 88 is of conventional design with a crankshaft driving a feeder fork, prongs 89 of which extend into gaps between neighbouring side-by-side strippers which support the crop. Drive to the crank shaft is transmitted through a clutch. Thus the pick-up 58 and the mechanism 88 constitute a crop delivery unit. There are potential flow paths for crop between the roll 76 and pick-up 58, between the feeder fork mechanism 88 and the roll 20 (and its associated belts 46), and between the roll 20 and the roll 76.

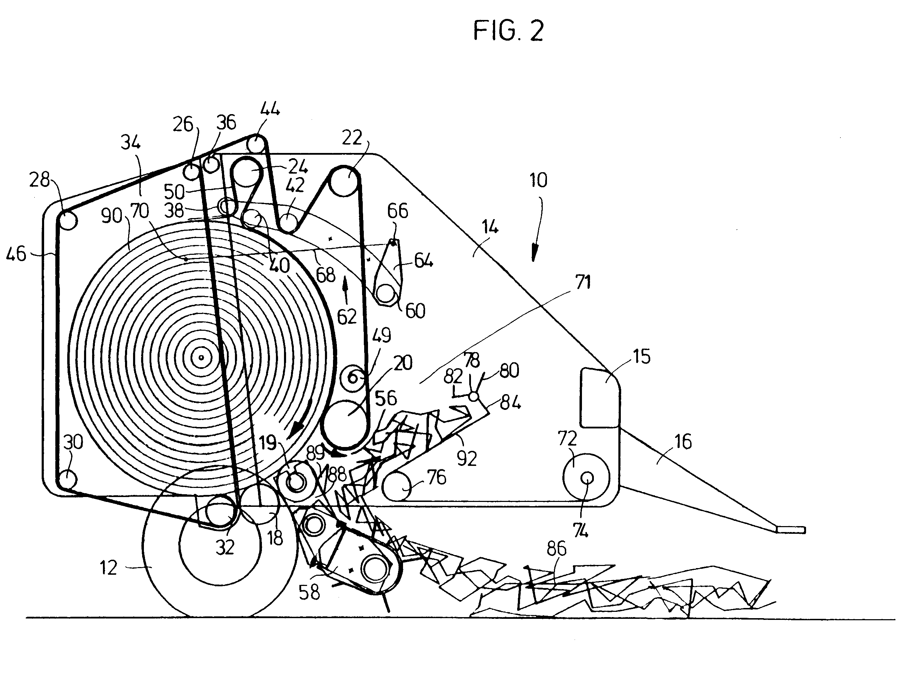

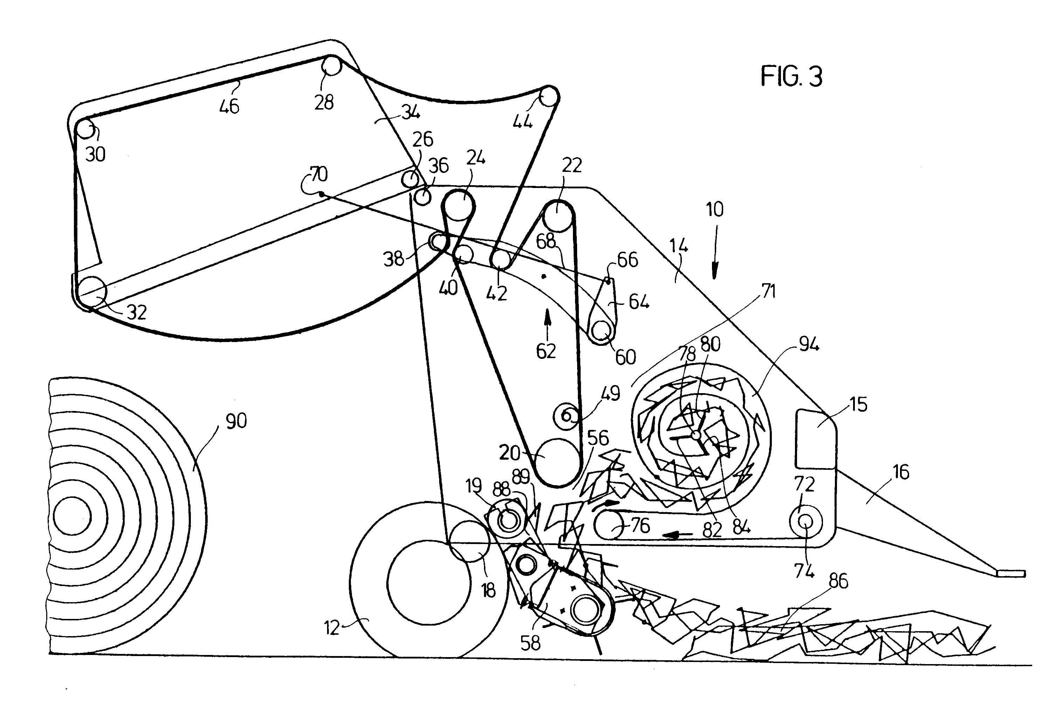

In operation as the round baler is drawn along the windrow 86 (as in Fig. 1) hay is lifted by the pick-up 58 which transfers it to the feeder mechanism 88 which in turn raises it to the feed roll 19 at the inlet 56 of the baling chamber 54 in which it is rolled round upon itself into a bale 90 between the oppositely moving runs 50, 52 of the belts 46. The baling chamber 54 expands against the loaded idler arms as the bale 90 grows in size until the bale is completed Fig. 2) whereupon crop flow to the inlet 54 by the feeder fork mechanism 88 is stopped and the bale 90 is tied with twine and as shown in Fig. 3 is finally discharged by swinging the gate 34 upwardly.

So that the baler can operate mainly non-stop during this period of tying and discharge, the feeder fork mechanism 88 is stopped by disengaging the clutch in the drive thereto and set with its fork prongs 89 at an angle (shown in Fig.2) which is such that the crop will divert in its course to the flow path between the rolls 20 and 76, only the still functioning pick-up 58 endowing the crop with its movement. The same result can be obtained, without disengaging the feeder fork, by mounting the strippers in cantilever fashion on a shaft pivoting at the downstream end of the pick-up 58 enabling them to be set,when required, at an appropriate angle to divert the crop.

Thus the crop is fed onto a run 92 of the belting 72 between the roll 76 and the plate 84. The coiling shaft 78 is then driven anti-clockwise as in Fig. 3 causing the belting 72 to be turned in the "coiling" direction to form a spiral 94 with the crop packed between the layers of belting, the plates 80, 82, 84 serving to space the belting 72 away from the shaft 78 and initially to sweep the crop into the incipient spiral. In this way incoming crop is stored during tying and discharge of the bale 90.

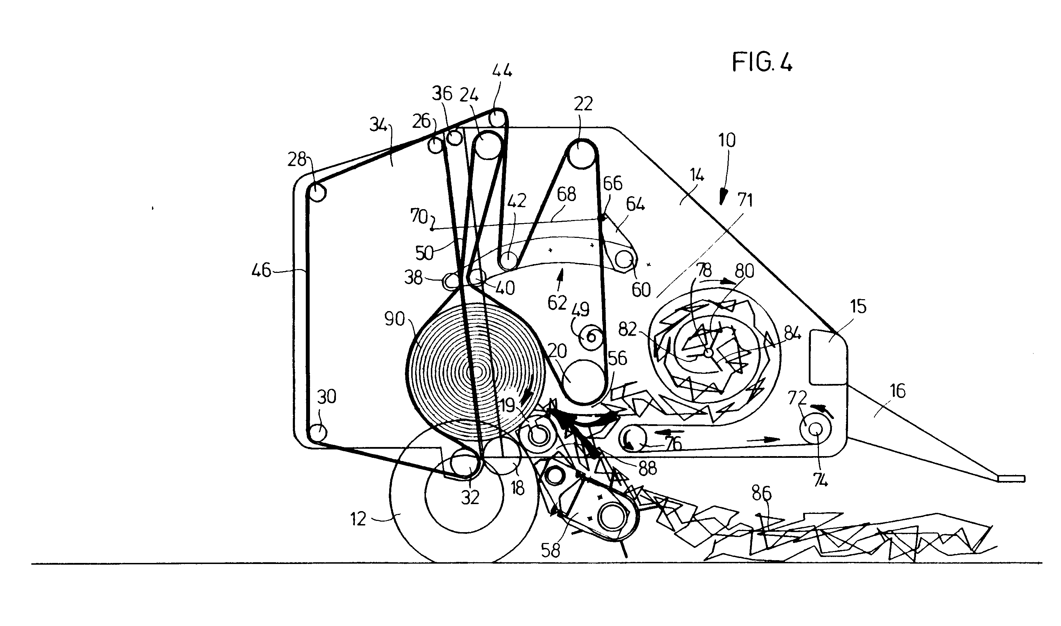

Finally when the gate 34 has been closed and the feeder fork mechanism 88 re-started (or the cantilevered strippers returned from their angled position to the stripping position) baling commences again as in Fig. 4, the drive to the coiling shaft 78 is cut and then the drive to the uncoiling shaft 74 is engaged to drive it anti-clockwise in the "uncoiling" direction. This results in the spiral 94 being turned clockwise to uncoil it and to advance the stored crop to the feeder fork mechanism 88 and to the inlet 56 joining the crop fed thereto from the windrow 86. Guides or a reversible feeder fork apparatus (not shown) can be positioned above the run 92 in front of the roll 20 to prevent contact during uncoiling between the crop and the belts 46.

The cycle is repeated and it is generally unnecessary to break the continuous progress of the baler along the windrow 86. A logical electronic circuit can control the cycle and the sequence can be displayed on a monitor in the cab of the tractor drawing the baler. A signal can be provided to inform the operator that the storage capacity of the belting 72 is approaching its peak. In this event the operator can reduce speed or stop until the bale 90 has been discharge and the gate 34 is again closed. The uncoiling shaft 74, the idler roll 76, and the coiling shaft 78 with its plates 80, 82, 84 constitute a "winder mechanism" for the web of belting 72. The belting 72 and winder mechanism are not expensive and yet the crop is well controlled during storage and during feeding from storage in that it is confined between layers of the belting.

The winder mechanism and web can also be used in balers with fixed position rolls defining the baling chamber.

As an alternative to a web consisting of a single belt the width of the baling chamber as above described, a web comprising of several belts side-by-side can be used. The web can be in the form of rubber belting generally similar to that of the baling belts 46 but it can also, for example, be woven or other suitable sheeting.

## Claims

1. A machine for forming bales of crop (90) having a baling chamber (54), a forward storage chamber (71), and a unit (58, 88) for delivering crop selectively to the baling or storage chamber (54, 71) in which the storage chamber (71) is delimited in its lower part by belt material including a portion located for receiving crop thereon from the delivery unit (58, 88) characterized in that the storage chamber (71) has a winder mechanism comprising: a position fixed belt support shaft (74) with said belt material wrapped upon it, extending transversely across said storage chamber (71), drivable in one direction and rotatable in the opposite direction; and a coiling shaft (78) extending across said storage chamber (71) in spaced relationship to said support shaft (74), receiving one end of said belt material and drivable in one direction and rotatable in the opposite direction wherein the drives for the shafts (74, 78) are arranged such that the coiling shaft (78) is drivable for conveying crop from the delivery unit to the storage chamber (71) where the belt material is coiled into a spiral and the crop is sandwiched in the spiral for storage and that the support shaft (74) is drivable for uncoiling the belt material and the crop so that the crop is released and conveyed by the belt material to the baling chamber (54).

2. A machine according to claim 1 characterised in that the coiling shaft (78) is connected to the said one end of the web (72) or belt material via an anchor plate (84) extending outwardly therefrom an inner edge portion of the plate being rigidly attached to the shaft (78) and an outer edge portion of the plate being attached to the said one end of the web (72).

3. A machine according to claim 2 characterised in that the plane of the anchor plate (84) is radial to the coiling shaft (78).

4. A machine according to claim 2 or 3 characterised in that a spacer plate or plates (80, 82) extends outwardly from the coiling shaft (78), an inner edge portion of the spacer plate or plates (80, 82) being rigidly attached to the coiling shaft (78), and the anchor and spacer plates (84, 80, 82) being spaced round the coiling shaft (78).

5. A machine according to any of claims 2 to 4 characterised in that the winder mechanism includes an idler roll (76) which is disposed intermediate the coiling and uncoiling shafts (78, 74) and over which the web (72) is trained.

6. A machine according to any preceding claim in which the delivery unit comprises a pick-up (58) characterised in that the delivery unit includes a feeder fork mechanism (88) at the downstream end thereof.

7. A machine according to claim 5 and 6 in which the baling chamber (54) has its inlet (56) for the crop on the underside of the machine characterised in that the uncoiling shaft (74) is at the front of the machine, the idler roll (76) is above the pick-up (58) and the coiling shaft (78) is at a level above the idler roll (76) and uncoiling shaft (74).

8. A machine according to claim 6 or 7 characterised in that the feeder fork mechanism (88) comprises a feeder fork, a crankshaft for driving the feeder fork, and strippers for supporting the crop which strippers are pivotally mounted at the downstream end of the pick-up (58), so as to be swingable between a stripping position and a position for directing crop to the storage chamber (71).

9. A machine according to any preceding claim characterised in that the web comprises a single conveyor belt (72).

10. A machine according to any of claims 1 to 7 characterised in that the web (72) comprises a plurality of side-by-side conveyor belts.

11. A machine according to any preceding claim characterised in that a crop guide or reversible feeder fork apparatus is disposed above the web (72).

**Revendications**

1. Machine pour former des balles de matière récoltée (90) qui comprend une chambre de formation de balle (54), une chambre de stockage avant (71) et un dispositif (58,88) pour distribuer la matière récoltée sélectivement à la chambre de formation de balle (54) ou à la chambre de stockage (71), la chambre de stockage (71) étant délimitée à sa partie inférieure par une bande dont une partie est située de manière à recevoir la matière récoltée provenant du dispositif de distribution (58,88), caractérisée en ce que la chambre de stockage (71) est équipée d'un mécanisme enrouleur comprenant : un arbre support de bande (74) en position fixe sur lequel est enroulée ladite bande, cet arbre s'étendant transversalement à ladite chambre de stockage (71), pouvant être entraîné dans un sens et pouvant tourner dans le sens opposé ; et un arbre d'enroulement (78) qui s'étend en travers de ladite chambre de stockage (71) à distance dudit arbre support (74), reçoit une extrémité de ladite bande et peut être entraîné dans un sens ou tourner dans le sens opposé ; les entraînements des arbres (74,78) étant prévus de sorte que l'arbre d'enroulement (78) peut être entraîné pour transporter la matière récoltée du dispositif de distribution à la chambre de stockage (71), où la bande s'enroule en une spirale et la matière récoltée est serrée entre les spires pour stockage, et de sorte que l'arbre support (74) peut être entraîné pour dérouler la bande et la matière récoltée, cette dernière étant ainsi libérée et transportée par la bande vers la chambre de formation de balle (54).

2. Machine suivant la revendication 1, caractérisée en ce que l'arbre d'enroulement (78) est relié à ladite extrémité de la bande (72) ou de la matière formant courroie, par l'intermédiaire d'une plaque d'ancrage (84) s'étendant vers l'extérieur à partir de cet arbre, un bord intérieur de la plaque étant rigidement fixé à l'arbre (78) et un bord extérieur de la plaque étant fixé à ladite extrémité de la bande (72).

3. Machine suivant la revendication 2, caractérisée en ce que le plan de la plaque d'ancrage (84) est radial par rapport à l'arbre d'enroulement (78).

4. Machine suivant la revendication 2 ou 3, caractérisée en ce qu'une ou plusieurs plaques d'espacement (80,82) s'étendent vers l'extérieur à partir de l'arbre d'enroulement (78), un bord intérieur de la plaque ou des plaques d'espacement (80,82) étant rigidement fixé à l'arbre d'enroulement (78), et les plaques d'ancrage et d'espacement (84,80,82) étant espacées autour de l'arbre d'enroulement (78).

5. Machine suivant l'une quelconque des revendications 2 à 4, caractérisée en ce que le mécanisme enrouleur comprend un rouleau fou (76) qui est disposé entre l'arbre d'enroulement (78) et l'arbre de déroulement (74) et sur lequel passe la bande (72).

6. Machine suivant une quelconque des revendications précédentes, dans laquelle le mécanisme de distribution comprend un dispositif de ramassage (58), caractérisée en ce que l'ensemble de distribution comprend un mécanisme alimentateur à fourche (88) à son extrémité aval.

7. Machine suivant les revendications 5 et 6, dans laquelle la chambre de formation de balle (54) a son entrée (56) pour la matière récoltée du côté inférieur de la machine, caractérisée en ce que l'arbre de déroulement (74) est à l'avant de la machine, le rouleau fou (76) est au-dessus du dispositif de ramassage (58), et l'arbre d'enroulement (78) est à un niveau supérieur à celui du rouleau fou (76) et de l'arbre de déroulement (74).

8. Machine suivant la revendication 6 ou 7, caractérisée en ce que le mécanisme alimentateur à fourche (88) comprend une fourche d'alimentation, un vilebrequin d'entraînement de la fourche d'alimentation, et des séparateurs pour supporter la matière récoltée, ces séparateurs étant montés de façon pivotante à l'extrémité aval du dispositif de ramassage (58) de façon à pouvoir pivoter entre une position de séparation et une position d'aiguillage de la matière récoltée vers la chambre de stockage (71).

9. Machine suivant une quelconque des revendications précédentes, caractérisée en ce que la bande est constituée d'une courroie transporteuse unique (72).

10. Machine suivant une quelconque des revendications 1 à 7, caractérisée en ce que la bande (72) est constituée d'une pluralité de courroies transporteuses placées côte-à-côte.

11. Machine suivant une quelconque des revendications précédentes, caractérisé en ce qu'un guidage de matière récoltée ou un appareil d'alimentation à fourche réversible est disposé au-dessus de la bande (72).

**Patentansprüche**

1. Maschine zum Formen von Erntegutballen (90) mit einer Ballenformkammer (54), einer vorderen Speicherkammer (71) und einer Einheit (58,88), um das Erntegut selektiv in die Ballenform- (54) oder die Speicherkammer (71) zu liefern, bei der die Speicherkammer (71) in ihrem unteren Bereich durch Bandmaterial einschließlich eines Abschnittes begrenzt ist, der so angeordnet ist, daß er des Erntegut von der Zuliefereinheit (55,88) auf diesem Abschnitt aufnimmt, dadurch **gekennzeichnet,** daß die Speicherkammer (71) einen Aufwickelmechanismus aufweist, der umfaßt: eine ortsfeste Bandstützwelle (74), auf der das genannte Bandmaterial aufgewickelt ist, die sich quer durch die Speicherkammer (71) erstreckt, in einer Richtung antreibbar und in der Gegenrichtung drehbar ist; und eine Wickelwelle (78), die sich quer durch die genannte Speicherkammer (71) im Abstand zu der genannten Stützwelle (74) erstreckt, ein Ende des genannten Bandmaterials aufnimmt und in einer Richtung antreibbar und in der Gegenrichtung drehbar ist, wobei die Antriebe für die Wellen (74,78) so angeordnet sind, daß die Wickelwelle (78) für das Fördern des Erntegutes von der Zuliefereinheit in die Speicherkammer (71) antreibbar ist, in welcher das Bandmaterial spiralförmig aufgewickelt und das Erntegut in der Spirale zu Speicherzwekken geschichtet ist, während die Stützwelle (74) zum Abwickeln des Bandes und des Erntegutes antreibbar ist, so daß das Erntegut freigegeben und durch das Bandmaterial in die Ballenformkammer (54) gefördert wird.

2. Maschine nach Anspruch 1, dadurch **gekennzeichnet,** daß die Wickelwelle (78) mit dem genannten einen Ende der Bahn (72) oder des Bandmaterials über eine Verankerungsplatte (84) verbunden ist, welche sich von der Welle nach außen erstreckt, wobei ein innerer Kantenbereich der Platte mit der Welle (78) starr verbunden ist, während ein äußerer Kantenbereich der Platte an dem genannten einen Ende der Bahn (72) angebracht ist.

3. Maschine nach Anspruch 2, dadurch **gekennzeichnet,** daß die Ebene der Verankerungsplatte (84) gegenüber der Wickelwelle (78) radial verläuft.

4. Maschine nach Anspruch 2 oder 3, dadurch **gekennzeichnet,** daß eine Abstandsplatte oder mehrere solche Platten (80,82) sich von der Wickelwelle (78) nach außen erstrecken, ein innerer Kantenbereich der Abstandsplatte oder Platten (80,82) starr an der Wickelwelle (78) angebracht ist und daß die Verankerungs- und Abstandsplatte (84,80,82) um die Wickelwelle (78) in Abständen angeordnet sind.

5. Maschine nach irgendeinem der Ansprüche 2 bis 4, dadurch **gekennzeichnet,** daß der Aufwickelmechanismus eine Zwischenrolle (76) aufweist, die zwischen der aufwickelnden und der abwickelnden Welle (78,74) angeordnet und über die die Bahn (72) gezogen ist.

6. Maschine nach irgendeinem der voranstehenden Ansprüche, bei der die Zuliefereinheit eine Pick-up-Vorrichtung (58) aufweist, dadurch **gekennzeichnet,** daß die Zuliefereinheit einen zur Zuführung dienenden Gabelmechanismus (88) an seinem stromabwärts liegenden Ende aufweist.

7. Maschine nach Anspruch 5 und 6, in der die Ballenformkammer (54) ihren Einlaß (56) für den Eintritt des Erntegutes auf der Unterseite der Maschine aufweist, dadurch **gekennzeichnet,** daß die Abwickelwelle (74) sich am Frontbereich der Maschine befindet, die Zwischenrolle (76) über der Pick-up-Vorrichtung (58) angeordnet ist und die Wickelwelle (78) sich auf einem Niveau oberhalb der Zwischenrolle (76) und der Abwickelwelle (74) befindet.

8. Maschine nach Anspruch 6 oder 7, dadurch **gekennzeichnet,** daß der gabelförmige Gabelmechanismus (88) eine Zuführungsgabel, eine Kurbelwelle zum Antreiben der Zuführungsgabel und Abstreifelemente zum Unterstützen des Erntegutes aufweist, welche Abstreifelemente am stromabwärtsliegenden Ende der Pick-up-Vorrichtung (58) montiert sind, so daß sie zwischen einer Abstreifstellung und einer Stellung schwenkbar sind, in der sie das Erntegut der Speicherkammer (71) zuleiten.

9. Maschine nach irgendeinem der voranstehenden Ansprüche, dadurch **gekennzeichnet,** daß die Bahn ein einzelnes Förderband (72) umfaßt.

10. Maschine nach irgendeinem der Ansprüche 1 bis 7, dadurch **gekennzeichnet,** daß die Bahn (72) aus einer Mehrzahl von Seite an Seite angeordneten Förderbändern besteht.

11. Maschine nach irgendeinem der voranstehenden Ansprüche, dadurch **gekennzeichnet,** daß eine Erntegutführungseinrichtung oder eine zur Zuführung dienende umkehrbare Gabeleinrichtung oberhalb der Bahn (72) angeordnet ist.

FIG. 1

FIG. 2

EP 0 337 006 B1

FIG. 3

EP 0 337 006 B1

FIG.4